# EUROPEAN PATENT SPECIFICATION

(11) **EP 1 992 555 B1**
(45) Date of publication and mention of the grant of the patent: **19.01.2011**
(21) Application number: 08251673.3
(22) Date of filing: 13.05.2008
(51) Int. Cl.: B62K 21/18, B62K 25/08

(54) **Front wheel support device of motocycle**
Vorderradaufhängungsvorrichtung für ein Motorrad
Dispositif support de roue avant pour motocyclette

(30) Priority: 18.05.2007 JP 2007132729
(43) Date of publication of application: 19.11.2008
(73) Proprietor: Yamaha Hatsudoki Kabushiki Kaisha, Iwata-shi, Shizuoka 438-8501 (JP)
(72) Inventor: Tsuya, Koji c/o Yamaha Hatsudoki Kabushiki Kaisha, Iwata-shi Shizuoka-ken 438-8501 (JP)
(74) Representative: Schoppe, Fritz

(56) References cited:
- JP-A- 2 227 387
- JP-A- 10 016 861
- US-A1- 2006 279 062
- US-B1- 6 176 339

## Description

### Technical Field

The present invention relates to a front wheel support device of a motorcycle.

### Background Art

For example, a motorcycle mounting thereon a high power engine for racing or for a following level can have a vehicle body with high rigidity and the whole vehicle can be made from a single rigid body. When a motorcycle of such high performance corners at high speed and a considerably large load acts in a vehicle width direction, a side skid of a front wheel is liable to be generated due to a high frame rigidity. Since side skid of a front wheel deprives a driver of a feeling of grounding and makes the vehicle unstable, there is a need for appropriate measures.

It is firstly conceivable to decrease the rigidity of the whole body frame. However, when such measures are adopted simply, a region decreased in rigidity is extended over a whole body frame, so that the displacement of the whole frame becomes too large leading to a loss of traveling stability. It could be thought that a front fork is a portion which should be locally decreased in rigidity. However, although a front fork is an extremely important part for a load in a longitudinal direction of a vehicle, the essential function of the front fork can be damaged when the portion is decreased in rigidity. Accordingly, it is not possible to adopt such measures.

Hereupon, the inventor of the present application has paid to attention to a bracket, which connects between front forks. That is, with general motorcycles, front forks, from which a front wheel is suspended, are provided in pair on the left and right. Upper and lower portions of the both front forks are connected to each other by both upper · lower brackets and supported by the both brackets to be able to turn relative to a vehicle body. The applicant of the present application has proposed the provision of a notched portion of a predetermined shape on a part of a bracket in order to decrease the bracket in rigidity. JP-A-10-16861 discloses a structure, in which a notched portion is provided.

However, a notch disclosed in JP-A-10-16861 is disclosed only by means of the drawings and not specifically explained in the specification. It is thought that the notch disclosed in the document is formed with a view to exclusively avoiding interference with surrounding members and does not bring about a considerable decrease in rigidity for that large load in a vehicle width direction, which the invention assumes.

US2006/0279062 relates to a fork tree assembly for connecting a frame of a motorcycle to fork legs holding a steering axle. An upper clamp and a lower clamp are provided. The upper and lower clamps may have ornamental grooves formed therein.

The invention seeks to provide a support device for a front fork on a motorcycle, which enables stable traveling even when a load in a vehicle width direction acts.

### Summary

According to claim 1, an aspect of the invention provides a front wheel support device of a motorcycle comprising a handle shaft for steering, a pair of left and right front forks supporting a front wheel therebetween in a vehicle width direction, and an upper bracket and a lower bracket, which connect the both front forks to each other in upper and lower positions and include a pair of front fork inserted portions arranged on both ends in the vehicle width direction to permit the both front forks to be inserted therethrough, each of the front fork inserted portions having a split groove extending from a peripheral edge of the respective front fork inserted portion, and a handle shaft inserted portion disposed centrally in the vehicle width direction to permit the handle shaft to be inserted therethrough, and wherein the both front forks are supported on a vehicle body to be able to turn about the handle shaft, the handle shaft inserted portion is positioned in a position offset toward the rear of a vehicle from an axis connecting centers of the both front fork inserted portions to each other, and notched portions formed on at least one of the upper bracket and the lower bracket and which extend towards the front of a vehicle from a rear edge of said at least one of the upper bracket and the lower bracket as viewed from above the vehicle, the notched portions being spaced from said split grooves and cut to positions beyond axes which extend between a center of the handle shaft inserted portion and the centers of the front fork inserted portions.

For example, in case of cornering at high speed, a load in the vehicle width direction acts on the front forks from a front wheel side. On the other hand, since the notched portions having a predetermined depth are cut into at least one of the upper · lower brackets, which connect the both front forks to each other, to be directed toward the front of a vehicle from a rear edge on the rear of a vehicle, the brackets are correspondingly decreased in rigidity. Accordingly, since it is not necessary to decrease the body frame itself in rigidity, it is possible to make the vehicle body behave gently even in the case where a load in the vehicle width direction acts on the front wheel.

It has been confirmed that such effect is attained by setting a cut depth of the notched portions to positions beyond depths to axes, which connect between a center of the handle shaft inserted portion and centers of the both front fork inserted portions, from a rear edge of the bracket.

According to claim 2 the notched portions can be formed on the upper bracket and can be provided on the pair of left and right front fork inserted portions. In such an embodiment, the notched portions are advantageously set on the upper side, on which upper end sides of the front forks are connected to each other, and positioned close to the front fork inserted portions so that deformation is liable to be generated, so that it is liable to absorb a load in the vehicle width direction.

According to claim 3 a lightening portion can be formed in a region inwardly of both edges in a longitudinal direction of a vehicle between the pair of left and right front fork inserted portions on at least one of the upper bracket and the lower bracket. IN such an embodiment it is possible to further promote a decrease in transverse rigidity.

According to claim 4 the lightening portion can be formed to be slit-shaped in the longitudinal direction of a vehicle and the lightening portion positioned adjacent to and inwardly of the notched portions in the vehicle width direction includes a bottomed lightening portion.

According to claim 5 the lightening portion positioned inwardly of the bottomed lightening portion in the vehicle width direction can include a through lightening portion.

When the lightening portion or portions adjacent to the notched portions assume a through configuration, a region or regions between the lightening portion or portions and the notched portions are thin walled in a width direction and stress is concentrated on the region or regions, but when the lightening portion or portions adjacent to the notched portions are bottomed in configuration, it is possible to avoid stress concentration on the region or regions.

### Brief Description of the Drawings

Embodiments of the invention are described hereinafter, by way of example only, with reference to the accompanying drawings.
Fig. 1 is a side view showing the whole of a motorcycle.
Fig. 2 is a cross sectional view showing a state, in which a steering device is assembled.
Fig. 3 is a plan view showing an upper bracket.
Fig. 4 is a cross sectional view taken along the line IV-IV in Fig. 3.
Fig. 5 is a cross sectional view taken along the line V-V in Fig. 3.
Fig. 6 is a plan view showing a lower bracket.
Fig. 7 is a cross sectional view taken along the line VI-VI in Fig. 5.
Fig. 8 is a graph showing rates of change of rigidity of the upper bracket in a vehicle longitudinal direction and in a vehicle width direction.

### Detailed Description

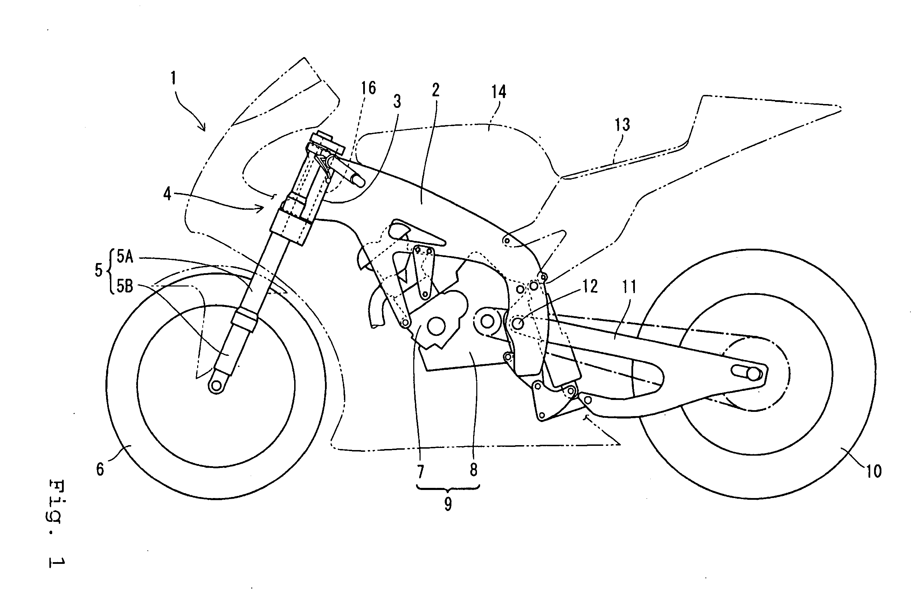

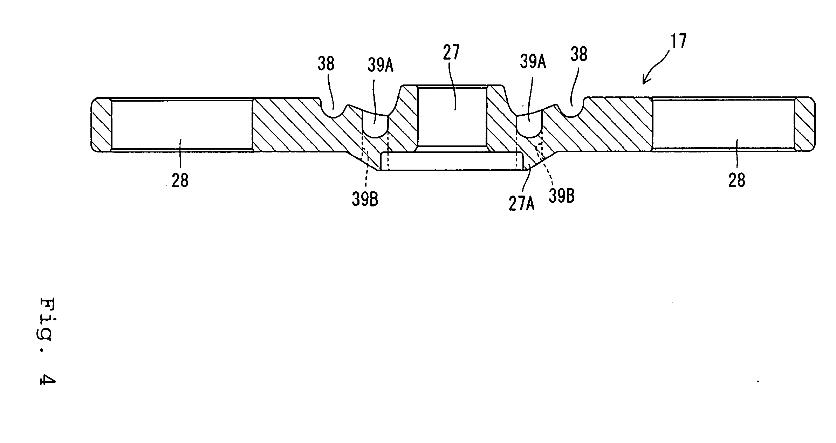

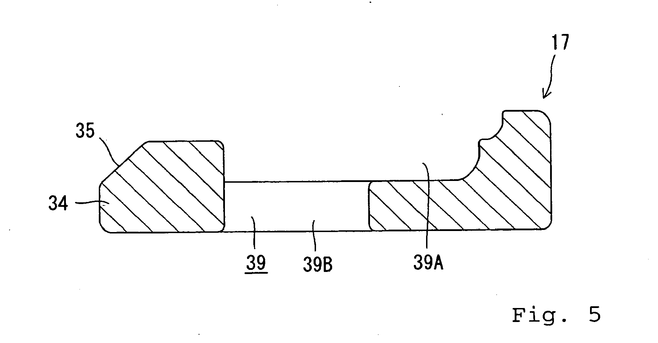

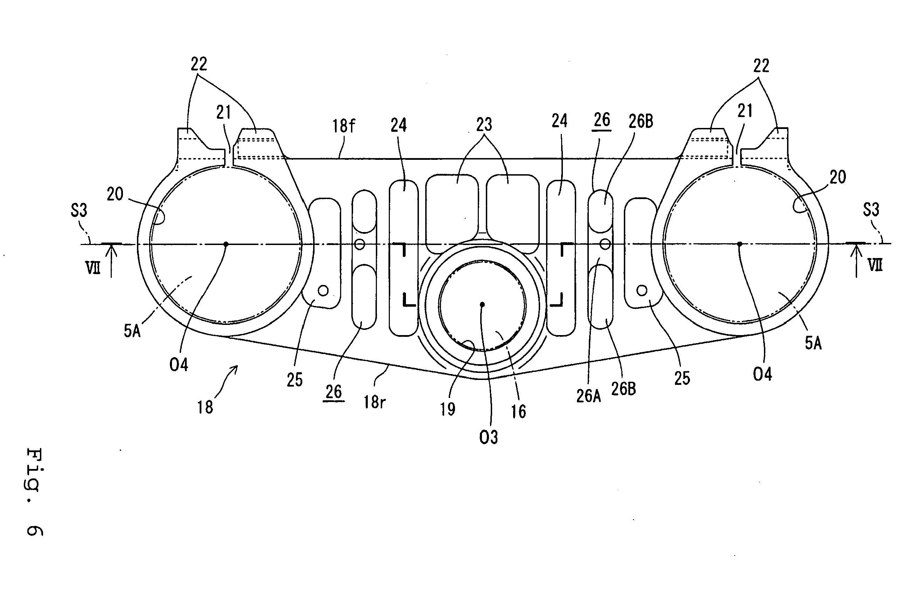

An embodiment of the invention will be described with reference to Figs. 1 to 7. In a motorcycle 1 according to the embodiment, a head pipe 3 is mounted to a front end of a body frame 2. A steering device 4 is mounted to the head pipe 3 and a front wheel 6 is mounted to lower ends of front forks 5 provided on the steering device 4. The body frame 2 mounts on a front, lower portion thereof a drive unit 9 (an engine 7 and a transmission 8) and mounts on a rear, lower portion thereof a rear swing arm 11, which supports a rear wheel 10, to enable the same to turn about a pivot shaft 12.

In addition, the reference numeral 13 denotes a seat and 14 a fuel tank.

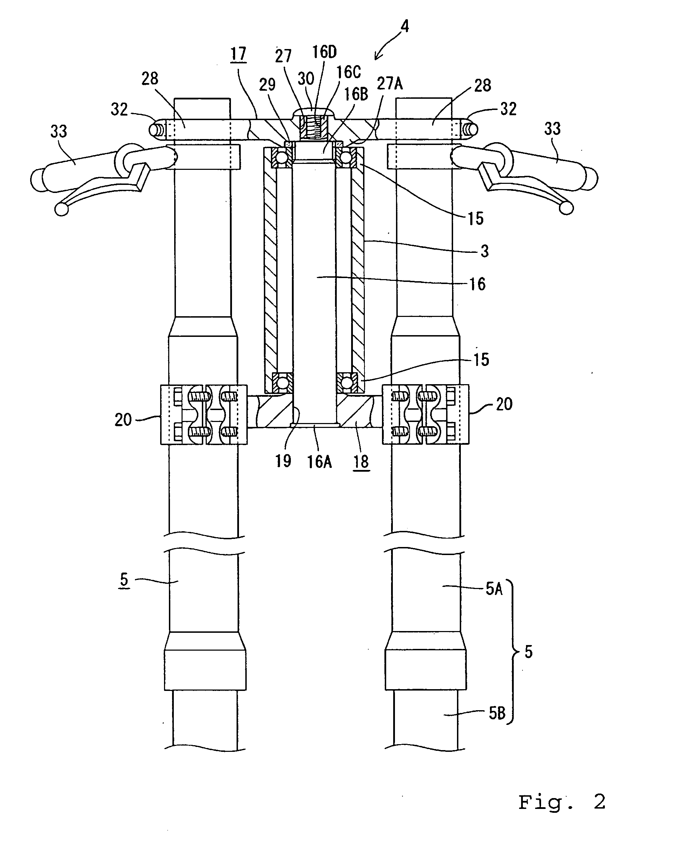

Fig. 2 shows a state, in which the steering device 4 is assembled. The steering device 4 comprises a handle shaft 16 inserted rotatably into the head pipe 3 with a bearing 15 therebeween, both upper lower brackets 17, 18 mounted to both upper and lower ends of the handle shaft 16, and a pair of front forks 5, 5 inserted through the lower bracket 18 and mounted at upper ends thereof to the upper bracket 17.

The both front forks 5, 5 are arranged vertically in a rearwardly inclined posture with the front wheel 6 interposed therebetween in a vehicle width direction. The front forks 5 use an inverted type comprising an outer tube 5A supported by the both upper lower brackets 17, 18 and an inner tube 5B inserted slidably into the outer tube 5A from a lower end side thereof. Lower ends of the inner tubes 5B support an axle shaft of the front wheel 6.

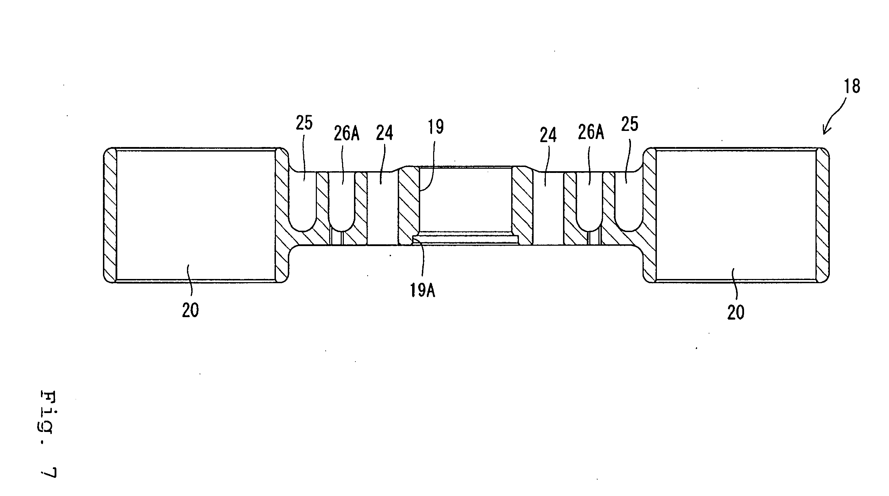

A pressure-fit hole (lower side handle shaft inserted portion 19), through which the lower end of the handle shaft 16 is pressure fitted to extend, is formed centrally of the lower bracket 18 in a width direction. As shown in Fig. 7, a large-diameter portion 19A is formed coaxially and stepwise on a lower edge side of the lower side handle shaft inserted portion 19 and fits therein a flange portion 16A formed protrusively at the lower end of the handle shaft 16. Lower side front fork inserted portions 20 are arranged through both ends of the lower bracket 18 in the vehicle width direction to interpose the lower side handle shaft inserted portion 19 therebeween. The both lower side front fork inserted portions 20 permit intermediate portions of the outer tubes 5A to extend therethrough. As shown in Fig. 7, the both ends of the lower bracket 18, on which the both lower side front fork inserted portions 20 are arranged, are formed heightwise dimensionally to project both upward and downward from a surface around the lower side handle shaft inserted portion 19. A center 03 of the lower side handle shaft inserted portion 19 is arranged in a position offset rearwardly of a vehicle from an axis S3 connecting between centers 04 of the both lower side front fork inserted portions. Correspondingly, an edge 18f of the lower bracket 18 on a vehicle front side is formed in parallel to a width direction while an edge 18r on a vehicle rear side defines an inclined edge diverging from the lower side handle shaft inserted portion 19 toward the lower side front fork inserted portions 20.

The both lower side front fork inserted portions 20 are formed at peripheral edges thereof with split grooves 21 diametrically from the vehicle front side and formed at opened edges thereof with opposite bolt clamped portions 22, so that clamping with bolts enables clamping of the outer tubes 5A inserted through the both lower side front fork inserted portions 20.

Also, lightening portions 23 to 26 in the form of a slot extending longitudinally of a vehicle are arranged in a plurality of locations at appropriate intervals between the both lower side front fork inserted portions 20 on the lower bracket 18. In the embodiment, a pair of large width through-holes 23 are extended and formed between the lower side handle shaft inserted portion 19 and the edge of the lower bracket 18 toward the vehicle front with a central axis of the lower side handle shaft inserted portion 19 in the vehicle width direction as a boundary. A pair of small width through-holes 24 are arranged in positions adjacent to and outwardly of the large width through-holes 23 in the vehicle width direction. On the other hand, bottomed holes 25 are arranged in positions adjacent to and inwardly of the both lower side front fork inserted portions 20 in the vehicle width direction. Mixed holes 26 comprising a bottomed portion 26A and through portions 26B in a mixed state are arranged between the both bottomed holes 25 and the small width through-holes 24. In the embodiment, the through portions 26B are positioned between both vehicle front and rear ends and the bottomed portion 26A is defined therebetween.

Like the lower bracket 18, the upper bracket 17 is formed centrally thereof in the vehicle width direction and therethrough with an upper side handle shaft inserted portion 27, which permits passage of the handle shaft 16 therethrough, and arranges on both ends in the vehicle width direction a pair of upper side front fork inserted portions 28, which permits passage of the outer tubes 5A therethrough. Also, like the lower bracket 18, a center O1 of the upper side handle shaft inserted portion 27 is arranged in a position offset toward the rear of a vehicle from an axis S1 connecting between centers O2 of the both upper side front fork inserted portions 28. As apparent from comparison with Fig. 2 or Figs. 4 and 7, the upper bracket 17 is formed to be generally thin-walled as compared with the lower bracket 18.

The handle shaft 16 is fixed to the upper side handle shaft inserted portion 27 as shown in Fig. 2. That is, a threaded portion 16B formed on an outer peripheral surface thereof with threads is formed toward an upper end of the handle shaft 16 and a nut 29 is clamped to a portion projecting upward from the head pipe 3. A small-diameter portion 16C extends coaxially at the upper end of the handle shaft 16, the small-diameter portion 16C being inserted into the upper side handle shaft inserted portion 27. A threaded hole 16D is formed axially on an upper end surface of the small-diameter portion 16C and a cap bolt 30 is screwed thereinto from the upper end surface. A short cylinder portion 27A is formed on a lower surface of the upper side handle shaft inserted portion 27 to accommodate the nut 29 therein.

The both upper side front fork inserted portions 28 are also formed diametrically on parts of peripheral edges thereof with split grooves 31. However, the split grooves 31 are formed from the vehicle front side on the lower bracket 18 but are cut obliquely at corner portions toward the rear of a vehicle on the upper side. Like the lower side, bolt clamped portions 32 are opposed to each other at opened edges of the split grooves 31, so that clamping with bolts enables clamping of the outer tubes 5A. Steering handles 33, respectively, are mounted to the outer tubes 5A of the both front forks 5 slightly below the upper bracket 17. Thereby, manipulation of the steering handles 33 enables the both upper lower brackets 17, 18 to turn about the handle shaft 16 and at the same time, steering of the front wheel 6 is enabled through the both front forks 5.

Also, the upper bracket 17 is formed centrally of a vehicle front edge thereof in the vehicle width direction with an arch portion 34, which projects horizontally toward the front of a vehicle relative to outer peripheral surfaces of the both upper side front fork inserted portions 28. Also, the arch portion 34 is formed at a vehicle front edge thereof with a tapered surface 35, which grades downward toward the front of a vehicle.

A pair of notched portions 36 are arranged at a vehicle rear edge of the upper bracket 17 and toward the both upper side front fork inserted portions 28. The both notched portions 36 are formed and opened on vehicle rear end sides thereof so as to make a vehicle rear edge of the upper bracket 17 open rearward and formed to be made gradually small in opened width as they go toward the vehicle front. Outer wall surfaces of the both notched portions 36 in the vehicle width direction are formed with arcuate portions 36A so that outer peripheral surfaces of the upper side front fork inserted portions 28 are made arcuate. Thereby, outer peripheries of the both upper side front fork inserted portions 28 interpose the split grooves 31 therebetween and have substantially the same thickness in a circumferential direction. Consequently, deformed motions of the both upper side front fork inserted portions 28 in an opened direction and in a closed direction are both made uniform with the split grooves 31 therebetween. On the other hand, inner wall surfaces of the notched portions 36 in the vehicle width direction are formed with straight portions 36B, which extend longitudinally of a vehicle. Also, semi-circular stress relief portions 36C are formed on terminal ends (vehicle front ends) of the notched portions 36 to achieve dispersion of stress.

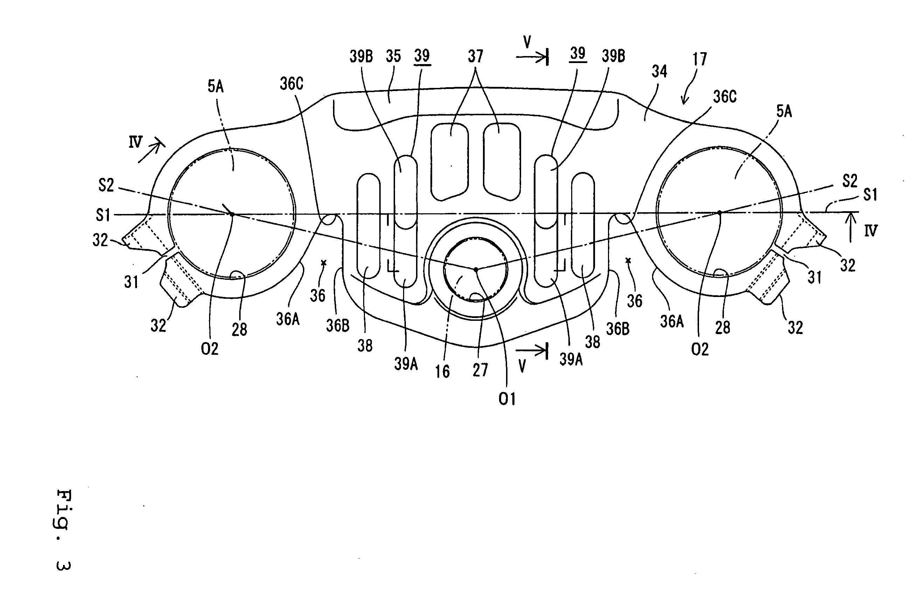

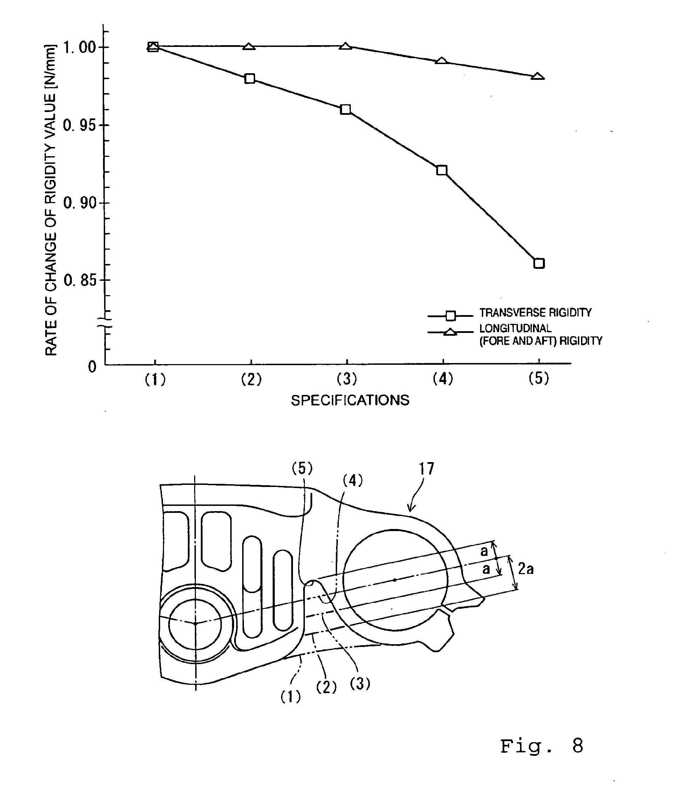

Cut depths of the notched portions 36 toward the front of a vehicle are set in the following manner. That is, the terminal ends of the notched portions 36 are set to get over axes S2 connecting between the center O1 of the upper side handle shaft inserted portion 27 and the centers O2 of the upper side front fork inserted portions 28 toward the front of a vehicle. As shown in Fig. 3, the axis S1 connecting between the centers O2 of the both upper side front fork inserted portions 28 defines a tangent line on frontmost ends of the stress relief portions 36C. While described later, the notched portions 36 reduce rigidity as indicated by a graph shown in Fig. 8 and allow elastic deformation, in which the upper side front fork inserted portions 28 shift in a height direction while approaching the upper side handle shaft inserted portion 27 when a load in the vehicle width direction acts on the front wheel 6 as well as the front fork 5.

Like the lower bracket 18, lightening portions in the form of a slot extending longitudinally of a vehicle are arranged in a plurality of locations at appropriate intervals on the upper bracket 17. A pair of large width through-holes 37 are formed through to border across a central axis of the upper side handle shaft inserted portion 27 in the vehicle width direction. On the other hand, small width bottomed holes 38 are arranged in positions adjacent to, inwardly of the straight surfaces 36B on the notched portions 36 in the vehicle width direction, and toward the rear edge of a vehicle. Small width mixed holes 39 comprising a bottomed portion 39A and a through portion 39B in a mixed state are arranged between the bottomed holes 38 and the large width through-holes 37. The bottomed portions 39A are arranged outwardly of the upper side handle shaft inserted portion 27 in the vehicle width direction and the through portions 39B are formed on extensions of the bottomed portions 39A to have the same width as the latter. The lightening portions 37 to 39 are provided in a plurality of locations on the upper bracket 17 whereby the upper bracket 17 is decreased in rigidity.

Fig. 8 shows how a whole front wheel support construction unit including the both front forks 5, the upper · lower brackets 17, 18, and the handle shaft 16 shown in Fig. 2 is varied in rigidity (rigidity (longitudinal rigidity) in the case where a load acts longitudinally of a vehicle) and rigidity (transverse rigidity) in the case where a load acts in the vehicle width direction) when the notched portions 36 is changed in cut depth. The longitudinal rigidity or the transverse rigidity was calculated under the following conditions. In the front wheel support construction shown in Fig. 2, a predetermined load acts on the lower end of the front fork 5 rearwardly of a vehicle or inward in the vehicle width direction in a state, in which the handle shaft 16 is fixed. In a position, in which a load acts, displacements rearwardly of a vehicle or displacements inwardly in the vehicle width direction, respectively, were calculated and the longitudinal rigidity or the transverse rigidity of the whole unit was obtained through simulation based on the displacements thus obtained. A graph in Fig. 8 indicates rates of respective values of rigidity obtained for other specifications, to the value of longitudinal rigidity or the value of transverse rigidity, which is obtained for the specification (1) and corresponds to "1". (5) in the graph corresponds to the embodiment. That is, (5) corresponds to the case where the terminal ends (cut depth) of the notched portions 36 get over the axes S2 (referred to as boundary lines S2) connecting between the center 01 of the upper side handle shaft inserted portion 27 and the centers 02 of the upper side front fork inserted portions 28 toward the front of a vehicle over a predetermined distance (dimension a). (4) corresponds to the case where the terminal ends of the notched portions 36 are set on the boundary lines S2. (3) corresponds to the case where the terminal ends of the notched portions 36 are set this side by (dimension a) toward the rear of a vehicle from the boundary lines S2. (2) corresponds to the case where the terminal ends are likewise set this side by (dimension 2a) from the boundary lines S2. (1) corresponds to the case where the notched portions 36 are not formed.

As apparent from that situation, in which the rate of change of the longitudinal rigidity is varied, shown in Fig. 8, it is seen that the longitudinal rigidity is substantially constant irrespective of the cut depth of the notched portions 36 and so the notched portions 36 have little influences on the longitudinal rigidity. It is thought that the edge of the upper bracket 17 toward the front of a vehicle contributes considerably to maintenance of the longitudinal rigidity and the upper bracket 17 is not lightened at the edge.

On the other hand, the transverse rigidity is not decreased substantially when the cut depth of the notched portions 36 is on the order of (1) to (3) but conspicuously tends to be decreased when the cut depth gets over the boundary lines S2 toward the front of a vehicle from the vicinity of the boundary lines S2. Accordingly, it is effective in decreasing the transverse rigidity to set the terminal ends of the notched portions 36 in positions toward the front of a vehicle beyond positions in the vicinity of the axes S2 connecting between the center O1 of the upper side handle shaft inserted portion 27 and the centers O2 of the upper side front fork inserted portions 28. However, in case of being a little beyond the position of (5), positions of the terminal ends of the notched portions 36 further decrease the transverse rigidity and are not practically problematic, but in case of being considerably beyond the position of (5), the upper bracket 17 itself is excessively decreased in strength, so that the terminal ends of the notched portions 36 will be set in such range.

There has been described that, in order to enable stable traveling even when a load in a vehicle width direction is applied, front forks 5 are connected to each other upward and downward by both upper lower brackets 17, 18. The upper bracket 17 arranges an upper side handle shaft inserted portion 27 centrally thereof and arranges upper side front fork inserted portions 28 at both ends thereof. The upper side handle shaft inserted portion 27 is positioned offset rearwardly of an axis S1 connecting between centers O2 of the upper side front fork inserted portions 28. Notched portions 36 are cut forwardly from a rear edge of the upper bracket 17. A cut depth is extended forwardly of axes S2 connecting between a center O1 of the upper side handle shaft inserted portion 27 and centers O2 of the upper side front fork inserted portions 28.

The invention is not limited to the embodiment illustrated in the above descriptions and the drawings but, for example, the following embodiments are included within the technical scope of the invention defined by the appended claims.

While in the embodiment the notched portions 36 are provided only on the upper bracket 17, they may be provided on the lower bracket 18. An embodiment is conceivable, in which the notched portions are provided only on the lower side instead of the upper side.

While the embodiment has been shown, in which the notched portions 36 are formed to be made gradually small in width as they go toward the front of a vehicle, the notched portions may be constant in width. In short, it suffices that the bracket be opened at an edge thereof toward the rear of a vehicle.

### Description of Reference Numerals and Signs

6: front wheel
16: handle shaft
17: upper bracket
18: lower bracket
19: lower side handle shaft inserted portion
20: lower side front fork inserted portion
27: upper side handle shaft inserted portion
28: upper side front fork inserted portion
36: notched portion
O1: center of upper side handle shaft inserted portion
O2: center of upper side front fork inserted portion
O3: center of lower side handle shaft inserted portion
O4: center of lower side front fork inserted portion
S1: axis connecting between centers of upper side front fork inserted portions
S2: axis connecting between center of upper side handle shaft inserted portion and center of front fork inserted portion
S3: axis connecting between centers of lower side front fork inserted portions

## Claims

1. A front wheel support device of a motorcycle comprising
a handle shaft (16) for steering,
a pair of left and right front forks supporting a front wheel therebetween in a vehicle width direction, and
an upper bracket (17) and a lower bracket (18), which connect the both front forks to each other in upper and lower positions and include a pair of front fork inserted portions (20, 28) arranged on both ends in the vehicle width direction to permit the both front forks to be inserted therethrough, each of the front fork inserted portions having a split groove extending from a peripheral edge of the respective front fork inserted portion, and a handle shaft inserted portion (19, 27) disposed centrally in the vehicle width direction to permit the handle shaft (16) to be inserted therethrough, and
wherein the both front forks are supported on a vehicle body to be able to turn about the handle shaft (16),
the handle shaft inserted portion (19, 27) is positioned in a position offset toward the rear of the vehicle from an axis (S1, S3) connecting centers of the both front fork inserted portions to each other, and
notched portions (36) formed on at least one of the upper bracket (17) and the lower bracket (18) and which extend towards the front of a vehicle from a rear edge of said at least one of the upper bracket (17) and the lower bracket (18) as viewed from above the vehicle, the notched portions (36) being spaced from said split grooves and cut to positions beyond axes (S2) which extend between a center (O1, 03) of the handle shaft inserted portion and the centers (02, 04) of the front fork inserted portions.

2. The front wheel support device of a motorcycle, according to claim 1, wherein the notched portions (36) are formed on the upper bracket (17) and provided on the pair of left and right front fork inserted portions.

3. The front wheel support device of a motorcycle, according to claim 1, wherein a lightening portion (37,38,39) is formed in a region inwardly of both edges in a longitudinal direction of a vehicle between the pair of left and right front fork inserted portions on at least one of the upper bracket (17) and the lower bracket (18).

4. The front wheel support device of a motorcycle, according to claim 3, wherein the lightening portion (37,38,39) is formed to be slit-shaped in the longitudinal direction of a vehicle and the lightening portion positioned adjacent to and inwardly of the notched portions in the vehicle width direction includes a bottomed lightening portion.

5. The front wheel support device of a motorcycle, according to claim 4, wherein the lightening portions (37,38,39) positioned inwardly of the bottomed lightening portion in the vehicle width direction includes a through lightening portion.

## Patentansprüche

1. Eine Vorderradhaltevorrichtung eines Motorrads, die folgende Merkmale umfasst:
eine Griffwelle (16) zum Lenken;
ein Paar von linken und rechten Vordergabeln, die ein Vorderrad in einer Fahrzeugbreiterichtung zwischen sich halten, und
eine obere Stütze (17) und eine untere Stütze (18), die die beiden Vordergabeln in einer oberen und in einer unteren Position miteinander verbinden, und ein Paar von Vordergabeleinfügeabschnitten (20, 28) umfassen, die auf beiden Enden in der Fahrzeugbreiterichtung angeordnet sind, um es zu ermöglichen, dass die beiden Vordergabeln durch dieselben eingefügt werden, wobei jeder der Vordergabeleinfügeabschnitte eine geteilte Rille aufweist, die sich von einem Umfangsrand des jeweiligen Vordergabeleinfügeabschnitts erstreckt, und einen Griffwelleneinfügeabschnitt (19,27) der mittig in der Fahrzeugbreiterichtung angeordnet ist, um es zu ermöglichen, dass die Griffwelle (16) durch denselben eingefügt wird, und
wobei die beiden Vordergabeln auf einem Fahrzeugkörper gehalten werden, um sich um die Griffwelle (16) drehen zu können,
der Griffwelleneinfügeabschnitt (19, 27) in einer Position versetzt zur rechten Seite des Fahrzeugs von einer Achse (S1, S3) aus gesehen positioniert ist, die die Mitten der beiden Vordergabeleinfügeabschnitte miteinander verbindet, und
eingekerbte Abschnitte (36), die zumindest entweder auf der oberen Stütze (17) oder der unteren Stütze (18) gebildet sind, und sich zu der Vorderseite eines Fahrzeugs hin erstrecken, von einem hinteren Rand von zumindest entweder der oberen Stütze (17) oder der unteren Stütze (18), von oberhalb des Fahrzeugs aus gesehen, wobei die eingekerbten Abschnitte (36) von den geteilten Rillen beabstandet sind und eingeschnitten sind bis zu Positionen über die Achsen (S2) hinaus, die sich zwischen einer Mitte (O1, 03) des Griffwelleeinfügeabschnitts und den Mitten (02, 04) der Vordergabeleinfügeabschnitte erstrecken.

2. Die Vorderradhaltevorrichtung eines Motorrads gemäß Anspruch 1, bei der die eingekerbten Abschnitte (36) auf der oberen Stütze (17) gebildet sind und auf dem Paar von linken und rechten Vordergabeleinfügeabschnitten vorgesehen sind.

3. Die Vorderradhaltevorrichtung eines Motorrads gemäß Anspruch 1, bei der ein Entlastungsabschnitt (37, 38, 39) in einer Region nach innen gerichtet von beiden Rändern in einer longitudinalen Richtung eines Fahrzeugs zwischen dem Paar von linken und rechten Vordergabeleinfügeabschnitten auf zumindest entweder der oberen Stütze (17) oder der unteren Stütze (18) angeordnet ist.

4. Die Vorderradhaltevorrichtung eines Motorrads gemäß Anspruch 3, bei der der Entlastungsabschnitt (37, 38, 39) gebildet ist, um in der longitudinalen Richtung eines Fahrzeugs schlitzförmig zu sein, und der Entlastungsabschnitt, der in der Fahrzeugbreiterichtung benachbart zu und nach innen gerichtet von den eingekerbten Abschnitten positioniert ist, einen mit einer Unterseite versehenen Entlastungsabschnitt umfasst.

5. Die Vorderradhaltevorrichtung eines Motorrads gemäß Anspruch 4, bei der der Entlastungsabschnitt (37, 38, 39), der in der Fahrzeugbreitenrichtung nach innen gerichtet von dem unteren Entlastungsabschnitt angeordnet ist, einen Durchgangsentlastungsabschnitt umfasst.

## Revendications

1. Dispositif support de roue avant pour motocyclette, comprenant
un arbre de guidon (16) destiné au guidage,
une paire de fourches avant gauche et droite supportant une roue avant entre elles dans le sens de la largeur du véhicule, et
un bras-support supérieur (17) et un bras-support inférieur (18), qui relient entre eux les deux fourches avant en positions supérieure et inférieure et comportent une paire de parties d'introduction de fourche avant (20, 28) disposées aux deux extrémités dans le sens de la largeur du véhicule, pour permettre aux deux fourches avant d'y être introduites, chacune des parties d'introduction de fourche présentant une rainure fendue s'étendant d'un bord périphérique de la partie d'introduction de fourche avant respective, et une partie d'introduction d'arbre de guidon (19, 27) disposée de manière centrale dans le sens de la largeur du véhicule, pour permettre à l'arbre de guidon (16) d'y être introduit, et
dans lequel les deux fourches avant sont supportées sur un châssis de véhicule de manière à pouvoir tourner autour de l'arbre de guidon (16),
la partie d'introduction d'arbre de guidon (19, 27) est positionnée en une position décalée vers l'arrière du véhicule à partir d'un axe (S1, S3) reliant entre eux les centres des deux parties d'introduction de fourche avant, et
des parties à encoche (36) formées sur au moins l'un parmi le bras-support supérieur (17) et le bras-support inférieur (18) et qui s'étendent vers l'avant d'un véhicule à partir d'un bord arrière dudit au moins l'un parmi le bras-support supérieur (17) et le bras-support inférieur (18), vu du dessus du véhicule, les parties à encoche (36) étant distantes desdites rainures fendues et découpées à des positions au-delà des axes (S2) qui s'étendent entre un centre (01, 03) de la partie d'introduction d'arbre de guidon et les centres (02, 04) des parties d'introduction de fourche avant.

2. Dispositif support de roue avant pour motocyclette selon la revendication 1, dans lequel les parties à encoche (36) sont formées sur le bras-support supérieur (17) et prévues sur la paire de parties d'introduction de fourche avant gauche et droite.

3. Dispositif support de roue avant pour motocyclette selon la revendication 1, dans lequel une partie d'éclairage (37, 38, 39) est formée dans une région vers l'intérieur des deux bords dans le sens longitudinal d'un véhicule entre la paire de parties d'introduction de fourche avant gauche et droite sur au moins l'un parmi le bras-support supérieur (17) et le bras-support inférieur (18).

4. Dispositif support de roue avant pour motocyclette, selon la revendication 3, dans lequel la partie d'éclairage (37, 38, 39) est formée de manière à être de forme fendue dans le sens longitudinal d'un véhicule et la partie d'éclairage positionnée adjacente aux et vers l'intérieur des parties à encoche dans le sens de la largeur du véhicule comporte une partie d'éclairage inférieure.

5. Dispositif support de roue avant pour motocyclette, selon la revendication 4, dans lequel la partie d'éclairage (37, 38, 39) positionnée vers l'intérieur de la partie d'éclairage inférieure dans le sens de la largeur du véhicule comporte une partie d'éclairage traversante.
